# EUROPEAN PATENT APPLICATION

(11) **EP 4 699 979 A1**
(43) Date of publication of application: **25.02.2026**
(21) Application number: 24195344.7
(22) Date of filing: 20.08.2024
(51) Int. Cl.: C01B 32/192, C01B 32/194

(54) **METHOD FOR DEPOSITING TWO-DIMENSIONAL LAYERED HETEROSTRUCTURES ON A SUBSTRATE**

(71) Applicant: Danubia NanoTech, s.r.o., 90042 Dunajska Luzna (SK); Elektrotechnický ústav SAV, v. v. i., 841 04 Bratislava (SK)
(72) Inventor: Skákalová, Viera, 85102 Bratislava (SK); Kotrusz, Peter, 93405 Levice (SK); Hulman, Martin, 82105 Bratislava (SK); Bernàth, Kamil, 84102 Bratislava (SK)
(74) Representative: Richardt Patentanwälte PartG mbB

(57) **Abstract**

Disclosed is a method for depositing a two-dimensional layered heterostructure, comprising at least two first layers encapsulating at least one second layer, on a substrate. The method comprises: providing a graphene oxide suspension in water and a precursor material comprising a chemically-bonded transition or post-transition metal; mixing these to create a reactant composition; applying this composition to a substrate; and forming the layered heterostructure. The formation comprises reducing the graphene oxide to graphene to create the first layers, and performing a metathesis reaction with the precursor material to form the second layer.

## Description

### FIELD OF THE INVENTION

The invention relates to the field of two-dimensional layered heterostructures and methods for depositing thereof.

### BACKGROUND

In recent years, two-dimensional (2D) materials have garnered significant attention due to their unique physical, chemical, and electronic properties. These materials exhibit promising applications in various fields such as electronics, optoelectronics, energy storage, and catalysis. Among these, heterostructures composed of multiple 2D materials are particularly interesting because they offer opportunities to combine and tailor the properties of individual layers to achieve novel functionalities.

The fabrication of such heterostructures typically involves complex and multi-step processes, comprising e.g., mechanical exfoliation, chemical vapor deposition, and transfer techniques. These methods, while effective, often face challenges related to scalability, reproducibility, and interface quality.

### SUMMARY OF THE INVENTION

It is an objective to provide for a method for depositing a two-dimensional layered heterostructure comprising at least two first layers encapsulating at least one second layer, in particular one second layer, on a substrate as well as a two-dimensional layered heterostructure deposited on a substrate. The objectives underlying the invention are solved by the features of the independent claims.

In one aspect a method for depositing a two-dimensional layered heterostructure comprising at least two first layers encapsulating at least one second layer, in particular one second layer, on a substrate is disclosed. The method comprises providing a graphene oxide suspension and a precursor material. The graphene oxide suspension comprises graphene oxide and water. The precursor material comprises a chemically-bonded transition metal or post-transition metal. A post-transition metal may also be referred to as a poor metal, other metal, p-block metal and/or chemically weak metal. A post-transition metal may be aluminum, gallium, indium, thallium, tin, lead, bismuth, and/or polonium. The precursor material and the graphene oxide suspension are mixed to provide a reactant composition. The substrate is provided. The reactant composition is deposited onto the substrate. The two-dimensional layered heterostructure is formed on the substrate by reducing the graphene oxide to graphene forming the at least two first layers and performing a metathesis reaction with the precursor material resulting in a product forming the at least one second layer, in particular one second layer.

A two-dimensional (2D) layered heterostructure may refer to a structure e.g., comprising multiple layers of the same and/or different materials. For example, each layer is between 1 and 20, in particular in between 1 and 10 atoms thick. These heterostructures could combine different 2D materials to possibly create new properties and functionalities not found in the individual components. For example, combining layers of graphene and transition metal dichalcogenides (TMDs) such as molybdenum disulfide (MoS₂) may yield unique electronic, optical, magnetic, and mechanical properties valuable for advanced technological applications. These properties might comprise e.g., high electron mobility, magnetism, tunable bandgaps, and/or superior thermal conductivity, possibly making them suitable for next-generation electronic devices, photonic applications, and flexible electronics.

Layers in the context of 2D materials may refer to the individual sheets that e.g., make up the heterostructure. These layers may be typically stacked on top of each other, often possibly held together by van der Waals forces, possibly allowing for easy separation and reassembly. This stacking could be done in various sequences and orientations to e.g., tailor the properties of the final heterostructure. For example, alternating layers of graphene and MoS₂ could result in a material that combines the high conductivity of graphene with the semiconducting properties and/or magnetic properties of MoS₂. This may enable novel applications in transistors and other electronic components. For example, by combining layers of graphene with transition metal iodides and/or post-transition metal iodides, heterostructures that integrate the electrical properties of graphene with the diverse functionalities of the metal iodides are created. The diverse functionalities may comprise magnetism, catalysis, and/or electronic behaviors. For example, alternating layers of graphene and transition metal iodides, such as nickel iodide (NiI2) or iron iodide (FeI2), could result in a material that combines the high conductivity of graphene with the magnetic properties of NiI2 or the magnetic and catalytic properties of FeI2. This may enable novel applications in e.g., spintronic devices, advanced magnetic sensors, and catalytic systems for chemical reactions.

Encapsulating may comprise surrounding one material with another to e.g., protect or alter its properties. In 2D layered heterostructures, one material could be encapsulated by others to e.g., improve stability, prevent oxidation, or alter electronic properties. For example, a layer of MoS₂ might be encapsulated between two layers of graphene to protect it from environmental degradation and enhance its electronic performance. This encapsulation could also reduce the impact of defects and impurities, thereby possibly improving the overall efficiency and reliability of the device.

A substrate may be a base material. A substrate may be a material upon which 2D materials are e.g., deposited and/or grown. The substrate may influence the properties of the deposited 2D materials, possibly affecting their electronic, optical, and mechanical characteristics. For example, the substrate comprises flexible foil, silicon chips, sapphire, hexagonal boron nitride, quartz, polymer films, alumina, mica, metal foils, graphene, silicon dioxide, gallium nitride, polyethylene terephthalate, indium tin oxide, titanium dioxide, and/or ceramic, silicon wafers, glass, and/or flexible polymers. For example, a silicon wafer might be used as a substrate for growing two-dimensional layered heterostructures comprising at least two graphene layers for electronic applications.

Graphene may be a single layer of carbon atoms e.g., arranged in a hexagonal lattice. It may exert electrical conductivity. It may be transparent. It may be used in applications such as electronics, energy storage, and/or composites. For example, graphene oxide is a derivative of graphene that contains various oxygen-containing functional groups. The functional groups may comprise epoxides, hydroxyls, and/or carboxyls. These groups could make graphene oxide hydrophilic and dispersible in water. The electrical conductivity of graphene oxide may be lower as compared to graphene. Graphene oxide could be reduced to graphene to restore its properties.

A suspension may be a mixture in which material particles may dispersed in a liquid. The size of the material particles may be between 0.1 nm and 1mm, in particular between 1 nm and 100 µm. The size may be the diameter or the largest dimension of the particle. In the context of 2D materials, a graphene oxide suspension may refer to graphene oxide sheets dispersed in e.g., water or another liquid solvent. For example, a uniform graphene oxide film could be created by depositing the suspension comprising graphene oxide onto a substrate. For example, the graphene oxide is then be reduced to form a graphene layer. For example, the graphene layer is conductive.

For example, the graphene oxide sheets are prepared with a graphene oxide preparation method, the method comprising dispersing graphite and sodium nitrate in sulphuric acid resulting in a graphite dispersion. The graphite dispersion may be cooled to a temperature between 2 °C and 8 °C, in particular to a temperature between 4 °C and 6 °C, e.g., resulting in a cooled graphite dispersion. Potassium Permanganate may be added to the cooled graphite dispersion e.g., resulting in a cooled graphite potassium permanganate dispersion. The cooled graphite potassium permanganate dispersion may be heated to a temperature between 15 °C to 35 °C, in particular to a temperature between 20 °C and 30 °C, e.g., resulting in a warmed graphite potassium permanganate dispersion. The warmed graphite potassium permanganate dispersion may be stirred for at least 30 minutes, in particular for at least 60 minutes, in particular for at least 120 minutes, e.g., resulting in a stirred graphite potassium permanganate dispersion.

The stirred graphite potassium permanganate dispersion may be poured onto blocks of ice, e.g., resulting in a graphite-ice dispersion. Hydrogen peroxide may be added to the graphite-ice dispersion, e.g., resulting in a peroxide graphite dispersion. The peroxide graphite dispersion may be cooled to a temperature between 1 °C and 5 °C, in particular to a temperature between 2 °C and 4 °C, e.g., resulting in a cooled peroxide graphite dispersion. The cooled peroxide graphite dispersion may be kept at a temperature between 1 °C and 5 °C, in particular to a temperature between 2 °C and 4 °C for at least 1 hour, in particular for at least 6 hours, in particular for at least 12 hours, in particular for at least 15 hours resulting in a final graphene oxide. The final graphene oxide may be purified by e.g., at least one centrifugation block and at least one dispersion in water block until the pH of the final peroxide graphite dispersion is in between 6 and 8, in particular in between 6.5 and 7.5. Graphene oxide sheets may be obtained.

A precursor may be a compound or material that may undergo a chemical transformation to e.g., form another compound. In the context of 2D heterostructures, a precursor might be a transition metal salt, post-transition metal salt and/or coordination compound that, when e.g., reacted with another compound, may form a desired material layer of a different transition metal salt, post-transition metal salt and/or metal dichalcogenide. The coordination compound may be ammonium tetrathiomolybdate.

Chemically-bonded may refer to atoms or molecules that may be held together by chemical bonds. Chemical bonds may be covalent, ionic, metallic, hydrogen bonds, or Van der Waals forces. In 2D materials, the type of chemical bonding may influence the material's properties.

Transition metals may be elements in the d-block of the periodic table. They may be able to different oxidation states and complex compounds. Transition metals may exhibit catalytic, electronic, and/or magnetic properties. They may be useful in applications comprising catalysis, electronics, and materials science. Transition metals could be incorporated into 2D materials to e.g., enhance their properties or introduce new functionalities.

Post-transition metals may be elements in the p-block of the periodic table. Post-transition metals may be softer and may have lower melting points than transition metals. These metals could have a low toxicity and/or exert thermal and electrical conductivity. They may be useful in specific applications. Post-transition metals might be used in 2D heterostructures to achieve thermal stability and/or electronic characteristics.

A composition may be a mixture of at least two substances. The substances may be combined in specific proportions. In the context of 2D heterostructures, a reactant composition might include graphene oxide, at least one precursor metal salt, and a solvent. This composition may be deposited onto a substrate to e.g., form a desired layered structure.

Deposited or depositing may refer to the process of potentially applying a material onto another material and/or onto a surface of the another material. For example, graphene oxide can be deposited onto a silicon wafer to create a uniform layer. Proper deposition techniques may be essential for achieving high-quality, defect-free layers that may meet specific application requirements.

Reducing and/or chemical reduction may comprise a chemical reaction that e.g., removes oxygen and/or other elements from a chemical compound. Reducing and/or chemical reduction may also comprise e.g., decreasing the oxidation state of an atom that is reduced within a compound. In the context of graphene oxide, reduction may involve removing oxygen-containing groups to e.g., restore the sp2 hybridization of carbon atoms. The graphene oxide may be converted back to graphene. Its electrical conductivity may be restored. Reduction could be achieved through chemical, thermal, and/or electrochemical methods.

A metathesis reaction may be a chemical reaction in which bonds may be broken and may be formed. It may result in the exchange of elements or groups e.g., between reacting compounds. For example, a metathesis reaction is a double decomposition between two electrolytes, where the ions of the reactants exchange places to form new compounds. In the context of 2D materials, a metathesis reaction might be used to form new compounds or structures by e.g., reacting a metal precursor with another compound. For example, a metathesis reaction is a chemical process involving the exchange of bonds between two reacting chemical species which results in the creation of products with similar or identical bonding affiliations. For example, a metathesis reaction is represented by the general scheme: AB + CD → AD + CB and/or A + BC → AC + B.

For example, the disclosed method for depositing a two-dimensional layered heterostructure offers several advantages in material science and engineering. The use of a graphene oxide suspension mixed with a precursor material may provide a straightforward and scalable approach to creating complex heterostructures. The suspension comprises graphene oxide and water, which may ensure e.g., easy handling and uniform distribution of graphene oxide on the substrate. For example, the flexibility of choosing different materials as the precursor materials allows for tailoring the properties of the final material to specific applications, such as enhancing electronic, magnetic, or catalytic properties.

For example, by depositing the reactant composition onto the substrate, this method ensures a controlled and precise formation of the layered structure. This precision might lead to improved reproducibility and quality of the final product, which may be crucial for advanced technological applications. The reduction of graphene oxide to graphene may restore the superior electrical conductivity and mechanical strength of graphene, which may be essential for applications in electronics, sensors, and energy storage devices.

Furthermore, performing a metathesis reaction with the precursor material may allow for the efficient formation of the second layer, which is encapsulated by the graphene layers. This encapsulation could provide additional protection and stability to the second layer, possibly preventing degradation and possibly ensuring long-term performance. The overall process might result in a heterostructure with enhanced durability and functionality.

For example, the ability to form such heterostructures on various substrates could expand the range of potential applications. For example, using flexible substrates may lead to the development of flexible electronic devices, while using substrates with specific thermal or chemical properties might make the heterostructures suitable for high-temperature or corrosive environments.

For example, combining different 2D materials in layered heterostructures may enable the creation of materials with tailored electronic, magnetic, optical, and mechanical properties, leading to advanced applications in electronics, photonics, and energy storage. Encapsulation could protect sensitive materials from environmental degradation, enhancing their stability and performance.

For example, the ability to control the thickness and composition of each layer in a heterostructure might lead to the development of custom-tailored materials for specific applications. For example, in photonics, these materials could be used to create highly efficient light-emitting diodes (LEDs), photodetectors, and solar cells. In electronics, they could lead to the production of high-speed transistors, flexible circuits, and next-generation memory devices.

For example, the chemically-bonded transition metal or post-transition metal is comprised by a transition metal chloride or nitrate, post-transition metal chloride or nitrate or ammonium tetrathiomolybdate.

Transition metal chlorides may be compounds where a transition metal may be bonded to chlorine atoms (Cl⁻). Transition metal nitrates may be compounds where a transition metal may be bonded to nitrate ions (NO₃⁻). Post-transition metal chlorides may be compounds where a post-transition metal may be bonded to chlorine atoms (Cl⁻). Post-transition metal nitrates may be compounds where a post-transition metal may be bonded to nitrate ions (NO₃⁻).

Ammonium tetrathiomolybdate may be a compound with the formula (NH₄)₂MoS₄. It may comprise ammonium ions and the tetrathiomolybdate anion (MoS₄²⁻). Molybdenum may be coordinated by four sulfur atoms. This compound may be used as a precursor for e.g., synthesizing molybdenum disulfide (MoS₂). Molybdenum disulfide may be a material with applications in lubrication and electronics.

For example, in case the chemically-bonded transition metal or post-transition metal is comprised by the transition metal chloride or nitrate or the post-transition metal chloride or nitrate, reducing the graphene oxide to graphene comprises providing and adding hydroiodic acid onto the reactant composition deposited onto the substrate.

For example, one advantage could be that by using transition metal chlorides and/or nitrates, a portion of these transition metal chlorides and/or nitrates could be readily available and soluble in water, potentially ensuring a uniform mixture, which might make them easy to handle and incorporate into the graphene oxide suspension. Their reactivity could facilitate the metathesis reaction that is e.g., required to form the desired layered heterostructures. This might result in efficient formation of the transition metal iodides, potentially enhancing the properties of the resulting material.

The potential use of post-transition metal chlorides or nitrates, such as Al(NO₃)₃ or BiCl₃, could provide unique benefits. Bismuth compounds, for example, might impart specific electronic, magnetic or catalytic properties to the heterostructure. The reactivity of BiCl₃ could ensure a successful metathesis reaction, forming bismuth iodide within the heterostructure. This could result in a material with enhanced stability and functionality for specific applications, such as e.g., catalysis or electronic devices.

Ammonium tetrathiomolybdate might offer distinct advantages when e.g., used as the chemically-bonded transition metal. Its composition may allow for the formation of molybdenum disulfide (MoS₂) through e.g., metathesis reactions. MoS₂ may be known for its excellent lubricating properties and/or potential applications in electronics due to its semiconducting nature. Incorporating MoS₂ into the heterostructure could enhance its performance in these areas, potentially providing a material with combined conductive and semiconducting layers.

Overall, these compounds could ensure efficient reactions, uniform mixtures, and enhanced properties of the final heterostructure. This versatility could make the method applicable to a wide range of advanced materials with e.g., tailored functionalities for specific technological applications.

For example, in case the chemically-bonded transition metal or post-transition metal is comprised by the transition metal chloride or nitrate or the post-transition metal chloride or nitrate, the metathesis reaction with the precursor material is performed by providing and adding hydroiodic acid onto the reactant composition deposited onto the substrate and results in a transition metal iodide or post-transition metal iodide as the product. For example, in case the chemically-bonded transition metal is comprised by ammonium tetrathiomolybdate, the metathesis reaction is being adapted to result in molybdenum disulfide as the product.

Transition metal iodides may be compounds where a transition metal may be bonded to iodine atoms (I⁻). Post-transition metal iodides may be compounds where a post-transition metal may be bonded to iodine atoms (I⁻). Hydroiodic acid may be a strong acid consisting of hydrogen and iodine with the chemical formula HI. It may be a colorless or pale yellow aqueous solution that may be highly corrosive and may have a sharp, pungent odor. Hydroiodic acid may be a strong reducing agent and/or may be commonly used in chemical reactions to e.g., introduce iodine into compounds and/or to e.g., reduce other substances.

Molybdenum disulfide (MoS₂) may be a compound consisting of molybdenum and sulfur, wherein each molybdenum atom may be bonded to two sulfur atoms. It may have a layered structure like graphene, wherein layers of molybdenum atoms may be sandwiched between layers of sulfur atoms. MoS₂ may exert lubricating properties, thermal stability, magnetic properties in monolayer and few-layer form and/or semiconducting characteristics. A few-layer form may comprise 10 layers or less. It may be widely used as e.g., a dry lubricant, in catalysis, and in electronic applications such as transistors and photodetectors.

One advantage could be that the addition of hydroiodic acid to the reactant composition may facilitate the reduction of graphene oxide to graphene, potentially restoring the desirable properties of graphene, such as high electrical conductivity and mechanical strength. Furthermore, hydroiodic acid could effectively participate in the metathesis reaction with transition metal or post-transition metal chlorides or nitrates, potentially resulting in the formation of transition metal iodides or post-transition metal iodides. These iodides might offer unique electronic, optical, magnetic or catalytic properties, e.g., enhancing the overall functionality of the two-dimensional layered heterostructure. Thus, the use of hydroiodic acid in the method could facilitate efficient reduction and metathesis reactions, potentially leading to the formation of transition metal or post-transition metal iodides with enhanced properties.

In the case of ammonium tetrathiomolybdate comprising the chemically-bonded transition metal, the metathesis reaction may not need to involve hydroiodic acid. It may be adapted to e.g., produce molybdenum disulfide (MoS₂) as the product. For example, in case of ammonium tetrathiomolybdate comprising the chemically-bonded transition metal, graphene oxide is chemically reduced by ammonium tetrathiomolybdate. For example, graphene oxide is reduced to graphene. This process could integrate MoS₂ within the heterostructure, potentially providing several advantages. MoS₂'s semiconducting properties might complement the conductive properties of graphene, potentially resulting in a heterostructure with e.g., combined conductive and semiconducting layers. This could be beneficial for applications in electronics, where such materials may be used in transistors, sensors, and other devices.

The potential formation of MoS₂ within the heterostructure might also improve its mechanical and thermal stability, as MoS₂ may be known for its robustness under high temperatures and mechanical stress. This could enhance the durability and longevity of the final product, potentially making it suitable for use in demanding environments. Moreover, the unique lubricating properties of MoS₂ might add an additional layer of functionality to the heterostructure, potentially expanding its applications to areas such as wear-resistant coatings and friction-reducing materials.

For example, the depositing comprises depositing the reactant composition onto a surface of the substrate, in particular wherein the depositing technique comprises any one or a combination of the following: dip-coating, spray-coating, spin-coating, depositing by drying, drop-casting, printing, vapor deposition, electrodeposition, blade coating, slot-die coating, inkjet printing, or bar coating.

Surface may refer to the outermost layer of e.g., the substrate that may be exposed to e.g., the environment and any interacting materials and/or chemicals. This surface layer may directly contact other substances during the method. A film may be a layer or coating of a material that may be deposited or applied onto a surface. The thickness of a film may range from 1 nm to 1 mm.

Dip-coating may be a process where a substrate may be dipped into a liquid reactant composition and then may be withdrawn at a controlled speed, e.g., forming a film as the solvent evaporates. For example, this technique might be used to apply coatings to the substrate. Spray-coating may comprise spraying a liquid reactant composition onto a substrate by e.g., using a nozzle, which could produce a uniform layer over large areas. Spin-coating may be a method where a small amount of reactant composition may be deposited onto the center of a substrate, which may be then rapidly spun to spread the liquid evenly by centrifugal force.

For example, spin-coating comprises spin-depositing the reactant composition onto the substrate, wherein spin-depositing comprises applying the reactant composition to the substrate and rapidly spinning the substrate resulting in the reactant composition being spread across the surface of the substrate, wherein rapidly spinning comprises spinning the substrate with 500 revolutions per minute, RPM, to 10000 RPM, in particular with 1000 RPM to 6000 RPM.

Depositing by drying may refer to e.g., applying the reactant composition onto the substrate and then allowing the solvent to evaporate naturally. A film of the desired material may be left over after the evaporation. Drop-casting may comprise depositing small drops of the reactant composition onto the substrate and then allowing them to dry, potentially forming a film. Printing techniques, such as inkjet printing, may comprise e.g., depositing the reactant composition onto the substrate in a controlled pattern.

Vapor deposition may comprise processes like chemical vapor deposition (CVD) and physical vapor deposition (PVD), where the reactant material may be vaporized and then may be condensed onto the substrate, potentially forming a film. Electrodeposition may comprise e.g., applying an electrical current to e.g., drive the deposition of the reactant composition onto the substrate. Blade coating and/or slot-die coating may be techniques where the reactant composition may be spread onto the substrate using a blade or die, potentially forming a film. Bar coating may comprise spreading the reactant composition onto the substrate using a bar comprising a gap, wherein the size of the gap may control the thickness of the film.

One advantage could be that the depositing methods might allow for precise control over the thickness and uniformity of the deposited layers, potentially enhancing the quality and performance of the resulting two-dimensional layered heterostructures. Additionally, the potential flexibility to choose different techniques may enable the optimization of the deposition process for various substrates and reactant compositions. This could lead to improved scalability and reproducibility in the manufacturing of advanced materials for electronics, optoelectronics, and other high-tech applications.

The ability to e.g., use multiple deposition methods might also facilitate the creation of complex heterostructures with tailored properties, potentially expanding their application range and commercial viability. For example, techniques like spin-coating and inkjet printing might be particularly advantageous for creating uniform, high-quality films on small-scale devices, while methods like spray-coating and blade coating could be better suited for large-area application.

Moreover, these techniques may allow for the incorporation of various materials, such as transition metal compounds and post-transition metal compounds, into the heterostructure, thereby enhancing its functional properties. This flexibility might result in heterostructures with improved electrical conductivity, mechanical strength, thermal stability, and chemical resistance. In summary, the use of various deposition techniques could offer significant advantages in terms of precision, flexibility, and scalability. These methods might lead to the creation of high-quality, functional two-dimensional layered heterostructures with a wide range of applications in cutting-edge technologies.

For example, the graphene oxide suspension comprises graphene oxide sheets with a lateral size of at least 1µm. The lateral size is defined as the largest dimension within the plane of the graphene oxide sheets.

For example, the graphene oxide sheets have a maximum lateral size of 2000 µm, in particular of 1000 µm, in particular of 500 µm, in particular of 200 µm.

The lateral size of graphene oxide sheets may refer to the largest dimension within the plane of the sheets. In simpler terms, it may be the measure of the width or length of the sheet as e.g., opposed to its thickness. Graphene oxide sheets may be flat, two-dimensional materials, and their lateral size could vary. For example, graphene oxide sheets with a lateral size of at least 1 µm might be used, meaning each sheet has a width or length of at least 1 micrometer.

For example, the lateral size of graphene oxide sheets ranges from nanoscale dimensions up to several millimeters. For example, in the context of the claimed subject matter, the graphene oxide sheets might have a maximum lateral size of 2000 µm (2 millimeters), with specific sizes of 1000 µm, 500 µm, or 200 µm being particularly mention. These dimensions may indicate that the sheets may be relatively large in the plane direction, potentially offering a substantial surface area.

For example, using graphene oxide sheets with a lateral size of at least 1 µm could provide several advantages in the formation of two-dimensional layered heterostructures. Larger sheets might ensure more uniform and continuous coverage when deposited onto a substrate, e.g., reducing the number of gaps or defects in the resulting film. This uniformity could enhance the electrical, mechanical, magnetic, and thermal properties of the heterostructure, e.g., making it more suitable for advanced applications in electronics, sensors, and energy storage.

Moreover, larger lateral sizes might facilitate better interaction and overlap between adjacent sheets, which could enhance the structural integrity and stability of the heterostructure. This improved overlap might result in more robust mechanical properties, potentially increasing the durability and lifespan of the material in various applications.

In addition, larger graphene oxide sheets might provide a higher surface area for functionalization or interaction with other materials, such as transition metals or post-transition metals. This increased surface area could enhance the efficiency of chemical reactions, such as the reduction of graphene oxide to graphene. For example, graphene oxide sheets with lateral sizes up to 2000 µm might be ideal for creating large-area films or coatings with minimal defects. Such films could be highly beneficial in applications requiring large-scale, high-performance materials, such as flexible electronics, transparent conductive films, or advanced composite materials.

For example, the substrate has a solid aggregate state and comprises a surface that is chemically inert and resistant to corrosion.

Aggregate state may refer to the state of matter (solid, liquid, gas) that a material such as e.g., the substrate, may be in under given conditions. For example, the solid aggregate state refers to the physical form of the substrate and/or the surface of the substrate. For example, the solid aggregate state means it is in a solid phase as opposed to a liquid or gaseous phase.

For example, chemically inert means that the surface of the substrate does not react chemically with other substances. In this context, inert might also mean passive. For example, inert and/or passive implies that the substrate remains stable and unreactive when in contact with the materials and chemicals used in the method. For example, a chemically inert surface would not participate in unwanted chemical reactions during the process. For example, chemically inert comprises that the substrate does not chemically react with hydroiodic acid, graphene oxide, graphene, water, transition metal chlorides, transition metal nitrates, post-transition metal chlorides, post-transition metal nitrates and/or ammonium tetrathiomolybdate.

For example, resistant to corrosion means that the substrate and/or the surface of the substrate does not react with the chemicals used in the method. For example, resistant to corrosion further means that the substrate and/or the surface of the substrate does not degrade and/or corrode when exposed to the chemicals and conditions used in the method. Corrosion could be defined as the gradual destruction or deterioration of e.g., the substrate or e.g., the surface of the substrate, due to chemical reactions with its environment. For example, the environment comprises the chemicals and/or conditions used in the method. This process might involve oxidation, where the material may react with oxygen, or could result from exposure to various chemicals, moisture, or other environmental factors. Corrosion resistance may be crucial for maintaining the substrate's and/or the substrate surface' structural integrity and functionality over time and/or when used within the method.

The advantages of using a substrate with these characteristics could include increased durability and longevity of the substrate, possibly reduced maintenance and replacement costs, and possibly improved reliability and performance of the final product. By e.g., ensuring that the substrate remains stable and unaffected by the chemical processes, the overall efficiency and effectiveness of the method could be enhanced. Furthermore, by e.g., using chemically inert and corrosion-resistant materials, the risk of contamination and unwanted side reactions might be reduced, possibly leading to higher quality outcomes.

Additionally, the use of a substrate with these characteristics could enhance the safety of the process by minimizing the release of potentially harmful by-products that could result from chemical reactions involving the substrate. This could lead to a safer working environment and reduce the need for extensive safety measures. Moreover, substrates with chemically inert and corrosion-resistant properties may facilitate a broader range of applications. For example, they may be suitable for use in more aggressive chemical environments where other substrates would fail, thereby expanding the versatility of the method.

The use of such substrates may also contribute to environmental sustainability. Since these substrates do not degrade or corrode easily, they may result in less waste and a longer lifecycle for the materials involved. This could reduce the environmental impact associated with frequent replacement and disposal of substrates.

For example, the method further comprises, after providing the substrate, before the depositing, activating a substrate to become hydrophilic in case the substrate is not hydrophilic.

For example, not hydrophilic refers to the substrate and/or the surface of the substrate being hydrophobic, neutral and/or amphiphilic. For example, the method comprises, before the activating, checking if the substrate is hydrophilic. Hydrophilic may refer to the substrate having an affinity for water, e.g., allowing it to interact readily with water molecules. Hydrophobic may refer to the substrate repelling water, e.g., causing water droplets to form beads on its surface rather than spreading out.

For example, neutral substrates are those that neither attract nor repel water. These surfaces might have a balanced interaction with both water and non-water-based substances. For example, amphiphilic substrates have both hydrophilic and hydrophobic properties, meaning they contain regions that interact with water and regions that repel it.

The following first method may be used to check if a substrate is hydrophilic or not hydrophilic. For example, a clean, dry substrate absent of any contaminants and/or residues is prepared. For example, a small drop of water is applied to the substrate and/or a surface of the substrate. For example, in case the water spreads out and forms a thin film, the substrate is hydrophilic. For example, in case the water does not spread out and does not form a thin film, the substrate is not hydrophilic. Spread out may refer to the water droplet dispersing over an area of the surface of the substrate and/or the substrate instead of e.g., remaining in a compact, round shape. This may indicate that the water may be e.g., wetting the surface effectively. Forming a thin film may refer to the water e.g., creating a continuous and uniform layer across the surface of the substrate and/or the substrate, which may show that the water may be evenly distributed and may adhere to the substrate.

For example, in case the water forms a bead and does not spread, the substrate is hydrophobic. For example, in case the water neither spreads nor forms a bead, the substrate is neutral. For example, in case at least one portion of the water drop spreads while at least one another portion forms a bead, the substrate is amphiphilic.

For example, a contact angle formed between the water droplet and the surface of the substrate is measured. For example, in case the contact angle is less than 90 degrees, the substrate and/or the surface of the substrate is hydrophilic. For example, in case the contact angle is greater than 90 degrees, the substrate and/or the surface of the substrate is not hydrophilic.

The advantages of identifying and modifying the hydrophilicity of the substrate and/or the surface of the substrate could include improved wettability and adhesion in processes e.g., involving aqueous solutions. Hydrophilic surfaces might facilitate better coating and functionalization in various applications such as including but not limited to sensors, medical devices, and filtration systems. By e.g., tailoring the surface properties to meet specific needs, one could enhance the performance and functionality of the final product.

A hydrophilic substrate might further enhance the uniformity of the reactant composition's deposition, ensuring that e.g., the reactant composition spreads out evenly across the surface of the substrate and/or the substrate. This even distribution could result in a more consistent formation of the two-dimensional layered heterostructure, potentially improving the overall quality and performance of the final product.

Furthermore, hydrophilic surfaces might facilitate better adhesion of e.g., the graphene oxide and precursor materials, potentially reducing the likelihood of delamination or defects during the reduction and metathesis reactions. This improved adhesion could be particularly beneficial when forming the at least two first layers and the second layer, potentially ensuring robust encapsulation and stability of the heterostructure.

The activation of the substrate to become hydrophilic or the substrate being hydrophilic could also enhance the interaction between the substrate and the aqueous graphene oxide suspension. For example, this interaction may lead to more efficient and effective chemical reactions, such as the reduction of graphene oxide to graphene and the metathesis reaction to form the desired transition metal or post-transition metal compounds. For example, as a result, the overall efficiency of the method could be improved, potentially reducing the processing time and increasing the yield of high-quality layered heterostructures.

Additionally, by e.g., using a hydrophilic substrate, the range of depositing techniques that could be employed effectively might be expanded. For example, techniques such as dip-coating, spray-coating, and spin-coating might benefit from the enhanced wetting properties of a hydrophilic surface, leading to more precise and controlled layer formation. This versatility in deposition methods could allow for greater flexibility in the manufacturing process, e.g., accommodating various production scales and requirements.

For example, the activating comprises any one or a combination of the following: exposing the substrate to oxygen plasma, exposing the substrate to an electrostatic field, exposing the substrate to silane coupling agents.

For example, exposing the substrate to oxygen plasma comprises generating oxygen plasma by applying a high-frequency high-voltage to a low-pressure oxygen gas environment, wherein the high-frequency is in between 5 MHz to 20 MHz, in particular in between 10 MHz to 15 MHz, wherein the high-voltage is in between 60 V to 600 V, in particular in between 100 V to 300 V, wherein the low pressure is in between 0.05 Torr to 2 Torr, in particular in between 0.1 Torr to 1 Torr, wherein the oxygen gas environment comprises an oxygen concentration of over 99%, in particular over 99.5%. For example, the substrate is then exposed to the oxygen plasma.

For example, exposing the substrate to an electrostatic field comprises charging the substrate using an electrostatic field, wherein the electrostatic field is generated using high voltage, wherein the high voltage is in between 5 kV to 50 kV, in particular in between 10 kV to 30 kV.

For example, modifying the substrate using a silane coupling agent comprises modifying the substrate using a silane coupling agent, wherein the silane coupling agent comprises any one or a combination of the following: 3-Aminopropyltriethoxysilane, 3-Mercaptopropyltrimethoxysilane, Glycidoxypropyltrimethoxysilane, Vinyltrimethoxysilane, Phenyltriethoxysilane, Methacryloxypropyltrimethoxysilane, Octadecyltrimethoxysilane, Tetramethylorthosil icate.

For example, activating the substrate using methods such as exposure to oxygen plasma, electrostatic fields, and silane coupling agents, it might result in several advantages. Each of these methods could improve the wettability and adhesion properties of the substrate, which might enhance the uniformity of the deposition of the reactant composition. This uniformity could ensure a more consistent formation of the two-dimensional layered heterostructure, potentially improving the overall quality and performance of the final product.

The activation could also enhance the interaction between the substrate and the aqueous graphene oxide suspension, which might lead to more efficient and effective chemical reactions, such as e.g., the reduction of graphene oxide to graphene and the metathesis reaction to form the desired transition metal or post-transition metal compounds. Consequently, the overall efficiency of the method may be improved, potentially reducing the processing time and increasing the yield of high-quality layered heterostructures.

Furthermore, for example, using an activated substrate might facilitate better adhesion of the graphene oxide and precursor materials, potentially reducing the likelihood of delamination or defects during the reduction and metathesis reactions. This improved adhesion could ensure robust encapsulation and stability of the heterostructure, which may enhance the durability and longevity of the material in various applications.

Additionally, activating the substrate might expand the range of effective deposition techniques. Techniques such as dip-coating, spray-coating, and spin-coating could benefit from the enhanced wetting properties of an activated surface, leading to e.g., more precise and controlled layer formation. This versatility in deposition methods may allow for greater flexibility in the manufacturing process, e.g., accommodating various production scales and requirements.

For example, the oxygen content of the graphene oxide comprised by the reactant composition is at least 30 at%.

For example, the oxygen content refers to the proportion of oxygen atoms relative to the total number of atoms in a material. For example, it is expressed as a percentage. For example, the oxygen content of graphene oxide may specifically indicate the amount of oxygen-containing functional groups. For example, the functional groups comprise epoxides, hydroxyls, and carboxyls. For example, the functional groups are present on the graphene oxide sheets. For example, if the graphene oxide has an oxygen content of N atomic percent (at%), it means that N out of every 100 atoms in the graphene oxide structure are oxygen atoms.

One advantage could be that these oxygen-containing groups could make graphene oxide highly hydrophilic and dispersible in water, which might be beneficial for creating uniform suspensions. For example, a higher oxygen content could enhance the reactivity of the graphene oxide, facilitating its reduction to graphene through chemical, thermal, or electrochemical methods. This reactivity might be crucial in processes where the graphene oxide needs to be efficiently reduced to restore the desirable properties of graphene, such as its high electrical conductivity and mechanical strength.

The presence of oxygen-containing functional groups may also enable better interaction and bonding with other materials, which could be advantageous in the formation of two-dimensional layered heterostructures. These groups might improve the adhesion between graphene oxide and other layers, potentially ensuring a more stable and robust final structure. Additionally, a higher oxygen content could facilitate the incorporation of various functional materials into the graphene oxide structure, potentially enhancing the overall properties and performance of the heterostructure.

For example, for each 1 milligram of graphene oxide comprised by the reactant composition, the reactant composition comprises at least 70 mmol of the precursor material.

For example, specifying that for each 1 milligram of graphene oxide in the reactant composition, there is at least 70 mmol of the precursor material could provide several advantages. This ratio might ensure that there is a sufficient amount of precursor material to fully react with the graphene oxide, potentially leading to a more complete and efficient reduction process. This might result in the formation of high-quality graphene layers e.g., with fewer defects and better overall properties.

The stated concentration of precursor material could also facilitate a more robust metathesis reaction, ensuring that the second layer, such as a transition metal or post-transition metal compound, may be uniformly formed and well-integrated within the heterostructure. This thorough integration might enhance the electrical, mechanical, magnetic, and thermal properties of the final material, potentially making it more suitable for advanced applications in electronics, sensors, and energy storage.

For example, the method is performed at a temperature between 0 °C and 1200 °C, in particular at a temperature between 5 °C and 1000 °C.

For example, the method is performed under ambient temperature, wherein the ambient temperature is in between 5 °C to 40 °C, in particular in between 15 °C to 30 °C, in particular in between 20 °C to 25 °C.

For example, performing the method at a temperature between 0 °C and 1200 °C could provide significant flexibility in processing conditions, allowing the method to be adapted to various material requirements and reaction kinetics. This wide temperature range might enable the optimization of the reduction of graphene oxide and the metathesis reaction, potentially leading to higher quality and more uniform layered heterostructures.

Potentially performing the method at ambient temperature, which may be between 5 °C to 40 °C, in particular between 15 °C to 30 °C, and in particular between 20 °C to 25 °C, could offer several specific advantages. Carrying out the method at ambient temperature may reduce energy consumption, may make the process more environmentally friendly and potentially more cost-effective. This could be particularly advantageous in large-scale production, where energy efficiency can lead to significant cost savings and a reduced carbon footprint.

Additionally, by e.g., working at ambient temperature, this might allow the use of substrates that may not be temperature-resistant. For example, many substrates could degrade, deform, or lose their desirable properties at elevated temperatures. By performing the method at lower temperatures, a broader range of substrates, including those made of polymers, flexible materials, or certain metals, may be used. This flexibility could expand the potential applications of the heterostructures in various fields, such as flexible electronics, wearable devices, and other advanced technologies.

For example, conducting the process at ambient temperature might improve the safety and simplicity of the procedure. For example, high-temperature processes often require specialized equipment, rigorous safety measures, and additional cooling periods, which can complicate the manufacturing process and increase operational risks. Ambient temperature methods could simplify the setup, potentially reduce safety hazards, and potentially streamline the overall workflow, potentially making it easier to implement and scale up.

For example, the method is performed under ambient pressure, wherein the ambient pressure is in between 85 kPa to 115 kPa, in particular in between 90 kPa to 110 kPa, in particular in between 95 kPa to 105 kPa.

One advantage could be that this approach might simplify the overall process by potentially eliminating the need for specialized high-pressure or vacuum equipment, which could reduce both the complexity and cost of the setup. Operating at ambient pressure may also enhance the safety of the procedure, as high-pressure systems may require rigorous safety measures to e.g., prevent accidents and equipment failure. By e.g., working within normal atmospheric conditions, the method might minimize these risks and may make the process more straightforward to manage.

For example, conducting the method at ambient pressure could improve the scalability and practicality of the production. High-pressure systems might be more challenging to scale up due to the potentially increased costs and potential technical difficulties potentially associated with maintaining uniform pressure conditions over larger areas or volumes. Ambient pressure processes could be more easily adapted to large-scale production, potentially increasing throughput and reducing manufacturing costs.

Furthermore, using ambient pressure may enhance the compatibility of the method with a wider range of substrates and materials. Some materials might be sensitive to high-pressure conditions, which could affect their structural integrity or functional properties. By performing the method at ambient pressure, these materials could be processed without risk of damage, thereby potentially expanding the variety of materials that may be used in the fabrication of two-dimensional layered heterostructures.

For example, the transition metal chloride or nitrate comprises any one of the following: CuCl₂, AgNO₃, FeCl₂, MnCl₂, NiCl₂, CoCl₂, CrCl₃, AuCl₃, VCl₃, ZnCl₂, NbCl₅. For example, the post-transition metal chloride or nitrate comprises any one of the following: BiCl₃, Al(NO₃)₃.

One advantage could be that these compounds might offer a wide range of chemical, magnetic and physical properties that may be tailored to specific applications. The diversity of transition metals could enable the creation of heterostructures with varying electronic, magnetic, and catalytic properties, potentially making them suitable for a broad array of applications, from electronics to energy storage and catalysis. For example, CuCl₂ and AgNO₃ might provide excellent electrical conductivity, while FeCl₂ and CoCl₂ could introduce magnetic properties, and CrCl₃ and VCl₃ might enhance catalytic activity.

The use of AuCl₃ might also impart unique optical and electronic characteristics, potentially beneficial for applications in photonics and advanced electronic devices. Incorporating BiCl3 as a post-transition metal could further diversify the functional properties of the heterostructures. Bismuth compounds might enhance the thermal stability and provide specific electronic properties that could be advantageous in semiconductor applications.

By having a variety of metal chlorides and nitrates to choose from, the method could be highly versatile, potentially allowing for the fine-tuning of the heterostructure's properties to e.g., meet specific performance criteria. This flexibility might lead to the development of more efficient and specialized materials tailored to the needs of various industries.

Moreover, these metal salts might be relatively easy to handle and incorporate into the reactant composition, potentially ensuring uniform distribution and consistent reaction outcomes. This uniformity could improve the quality and reproducibility of the final heterostructures, e.g., making the production process more reliable and scalable.

In another aspect, a two-dimensional layered heterostructure deposited on a substrate is disclosed. The two-dimensional heterostructure comprises at least two first layers comprising graphene and at least one second layer, in particular one second layer, comprising a transition metal iodide, a post-transition metal iodide or molybdenum disulfide. The at least one second layer, in particular the one second layer, is encapsulated by at least one first layer on each side.

For example, the two-dimensional layered heterostructure has a minimum thickness of at least 1 nm. For example, the two-dimensional layered heterostructure has a maximum thickness of 50 nm, in particular 30 nm, in particular 15 nm.

The two-dimensional layered heterostructure may present several advantages. The graphene layers may offer exceptional electrical conductivity, mechanical strength, and thermal stability, potentially making them ideal for a wide range of applications. The encapsulation of the second layer by the graphene layers could protect the sensitive material from environmental degradation, thereby e.g., enhancing the longevity and reliability of the heterostructure. This protection might be particularly beneficial in harsh operating conditions where oxidation or other chemical reactions could otherwise deteriorate the performance of the transition metal iodide, post-transition metal iodide, or molybdenum disulfide.

Furthermore, e.g., the inclusion of a transition metal iodide, post-transition metal iodide, or molybdenum disulfide as the second layer may impart unique electronic, magnetic, optical, or catalytic properties to the heterostructure. These materials might offer functionalities such as tunable bandgaps, magnetic properties, or catalytic activity, thereby e.g., broadening the potential applications of the heterostructure in fields like electronics, optoelectronics, and catalysis. The combination of graphene with these materials could result in synergistic effects, where the overall performance of the heterostructure may surpass that of the individual components.

Additionally, the layered structure might enable precise control over the thickness and composition of each layer, potentially allowing for the customization of material properties to meet specific requirements. This precision could be crucial in developing advanced devices such as high-speed transistors, photodetectors, and sensors. The flexibility in material choice and layer configuration may also lead to the development of innovative applications in emerging technologies, such as e.g., flexible electronics and wearable devices.

Moreover, for example, the method of encapsulating the second layer between graphene layers could improve the heterostructure's mechanical integrity, potentially reducing the likelihood of delamination or mechanical failure. This improved structural stability might be particularly advantageous in applications potentially requiring robust and durable materials.

It is understood that examples of the aspect of the method for depositing a two-dimensional layered heterostructure on a substrate are also applicable to the other aspects, namely the two-dimensional layered heterostructure deposited on a substrate, as long as the combined aspects and/or examples are not mutually exclusive.

It is understood that one or more of the aforementioned examples may be combined as long as the combined examples are not mutually exclusive.

### BRIEF DESCRIPTION OF THE DRAWINGS

In the following, examples are described in greater detail making reference to the drawings in which:
Fig. 1 is a schematic of a method for depositing a two-dimensional layered heterostructure on a substrate,
Fig. 2 shows a two-dimensional layered heterostructure.

### DETAILED DESCRIPTION

In the following, similar elements are denoted by the same reference numerals.

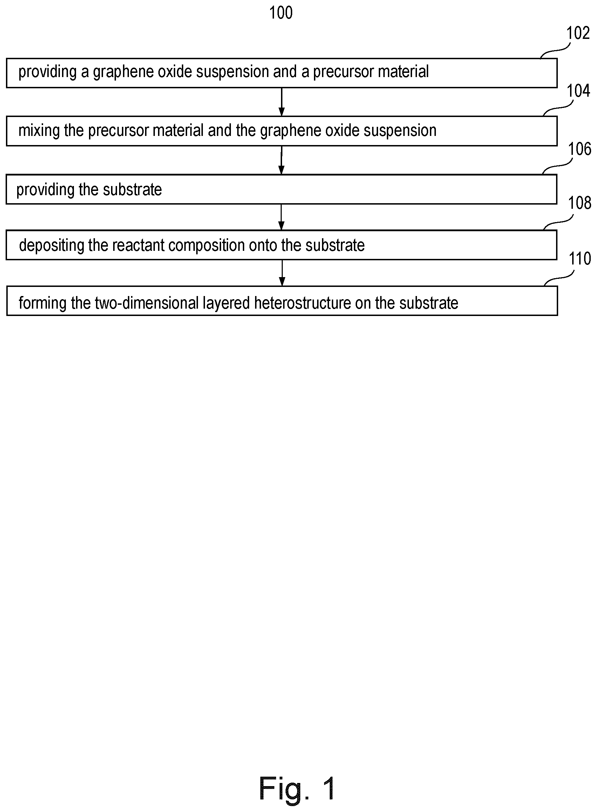

Figure 1 shows a schematic of a method 100 for depositing a two-dimensional layered heterostructure on a substrate. The two-dimensional layered heterostructure comprises at least two first layers encapsulating at least one second layer, in particular one second layer.

The method comprises block 102, in which a graphene oxide suspension and a precursor material is provided. The graphene oxide suspension comprises graphene oxide and water. The precursor material comprises a chemically-bonded transition metal or post-transition metal.

For example, the chemically-bonded transition metal or post-transition metal is comprised by a transition metal chloride or nitrate, post-transition metal chloride or nitrate or ammonium tetrathiomolybdate. For example, the transition metal chloride or nitrate comprises any one of the following: CuCl₂, AgNO₃, FeCl₂, MnCl₂, NiCl₂, CoCl₂, CrCl₃, AuCl₃, VCl₃, ZnCl₂, NbCl₅. For example, the post-transition metal chloride or nitrate comprises any one of the following: BiCl₃, Al(NO₃)₃.

The graphene oxide may be prepared as graphene oxide sheets and/or graphene oxide flakes. Graphene oxide sheets and graphene oxide flakes may have the same meaning. In the example of figure 1, the graphene oxide sheets may have a lateral size between 40 to 200 µm. In order to prepare the graphene oxide sheets, large flakes of graphene oxide may be synthesized from natural graphite powder through e.g., chemical oxidation following a low temperatures method.

For example, graphite (1 g) and sodium nitrate (0.5 g) are dispersed in concentrated sulphuric acid (24 mL). The dispersion may be cooled to about 5 ° C. For example, over a period of 30 minutes, in particular 1 hour, in particular 2 hours, in particular 3 hours, potassium permanganate (3.0 g) is added in small portions and the dispersion is stirred additional three hours at 20-30 °C. The reaction mixture may then be poured on ice (500 mL) and hydrogen peroxide (10 mL, 3%) may be added drop wise until gas evolution could be completed. The mixture may be kept between 1 - 5 °C, in particular at 2 - 4 °C, in particular at 2.5 - 3.5 °C for for at least 1 hour, in particular for at least 6 hours, in particular for at least 12 hours, in particular for at least 18 hours. least 12 hours, in particular for at least 15 hours resulting in a final peroxide graphite dispersion. The obtained graphite oxide may be purified by e.g., at least one centrifugation block and at least one dispersion in water block until the pH of the final peroxide graphite dispersion is in between 6 and 8, in particular in between 6.5 and 7.5. Graphene oxide sheets may be obtained. The graphene oxide suspension may be prepared by e.g., suspending the graphene oxide sheets in water.

In block 104, the precursor material and the graphene oxide suspension are mixed to provide a reactant composition. For example, molecular precursors of different metals (CuCl₂, AgNOa, FeCl₂, MnCl₂, NiCl₂, CoCl₂, CrCl₃, AuCl₃, BiCl₃, (NH₄)₂MoS₄) are mixed into water suspension of graphene oxide (0.1%) in proportions of 1/10 for at least 5 seconds, in particular for at least 30 seconds, in particular for at least 1 minute, in particular for at least 3 minutes.

In block 106, the substrate is provided. The substrate may by any one or a combination of the following: flexible foil, silicon chips, sapphire, hexagonal boron nitride, quartz, polymer films, alumina, mica, metal foils, graphene, silicon dioxide, gallium nitride, polyethylene terephthalate, indium tin oxide, titanium dioxide, and/or ceramic, silicon wafers, glass, and/or flexible polymers. For example, any other substrate that has a solid aggregate state and/or comprises a surface that is chemically inert and/or resistant to corrosion and/or the substrate itself is chemically inert and/or resistant to corrosion may also work. After providing the substrate, the substrate may be cleaned. After providing the substrate, before the depositing, the substrate may be activated to e.g., become hydrophilic in case the substrate is not hydrophilic. For example, the activating comprises any one or a combination of the following: exposing the substrate to oxygen plasma, exposing the substrate to an electrostatic field, exposing the substrate to silane coupling agents.

In Block 108, the reactant composition is deposited onto the substrate. In the example of block 108, 4 different deposition techniques may be used: dip-coating, spin-coating, spray-coating and drying. Other depositing techniques may also be used: drop-casting, printing, vapor deposition, electrodeposition, blade coating, slot-die coating, inkjet printing, or bar coating.

In block 108, at dip-coating, oxygen plasma-activated substrates may be periodically dipped into the graphene oxide/precursor mixture several times and vertically pulled out. For example, in order to avoid molecular precursors to cover the surface of the deposited layer, the last run of dipping is done in pure water suspension of graphene oxide. For example, at spray-coating, firstly, oxygen plasma-activated substrates are attached to a platform of the spray coating device (plotter), heated to a temperature in between 60 - 80 °C. For example, then, graphene oxide/precursor mixture is filled in the container of airbrush attached to a mechanical frame of the plotter with adjusted pressure to form homogeneous stream of small droplets sprayed on the platform with the substrates. A software of the plotter may be controlling the movement of the airbrush and may be set to cover the desired area required number of times.

For example, deposition by drying is a method where the oxygen plasma-activated substrates are placed in a flat dish in a strictly horizontal plane and covered with water suspension of graphene oxide with precursors. For example, then, the water is let slowly to evaporate. In order to e.g., avoid precursors to cover the surface of the deposited layer, another very small amount of water suspension of graphene oxide without precursor may be dried on top.

For example, spin-coating follows a similar procedure as spray coating but instead of spraying, water suspension of graphene oxide with precursors is spin-deposited on the oxygen plasma-activated substrates, with water suspension of graphene oxide without precursor spin-coated on top.

In block 110, the two-dimensional layered heterostructure is formed on the substrate. The graphene oxide is reduced to graphene forming the at least two first layers. A metathesis reaction with the precursor material resulting in a product forming the at least one second layer, in particular one second layer is performed.

For example, in case the chemically-bonded transition metal or post-transition metal is comprised by the transition metal chloride or nitrate or the post-transition metal chloride or nitrate, the metathesis reaction with the precursor material is performed by providing and adding hydroiodic acid onto the reactant composition deposited onto the substrate and results in a transition metal iodide or post-transition metal iodide as the product. For example, in case the chemically-bonded transition metal is comprised by ammonium tetrathiomolybdate, the metathesis reaction is being adapted to result in molybdenum disulfide as the product.

Thus, for example, to produce 2D metal iodides, hydro-iodic acid is used to reduce oxide groups from graphene oxide and to form 2D solid materials like Cul, Agl, BiI₃, FeI₂, CoI₂, NiI₂, MnI₂, VI₃, ZnI₂, Nb₃I₈, AlI₃ and/or others. For example, to produce 2D molybdenum disulfide, no additional reduction agent is required because the precursor molecule, (NH₄)₂MoS₄, acts as the reducing agent itself following a process. For example, the process is (NH₄)₂MoS₄ + O + OH -> MoS₂ + (NH₄)₂SO₄ + H₂O. The time needed for reduction of graphene oxide and synthesis of 2D MoS₂ may be at least 10 minutes, in particular 30 minutes, in particular 1 hours, in particular 2 hours.

For example, in the transition metal chloride or nitrate comprises any one of the following: CuCl₂, AgNO₃, FeCl₂, MnCl₂, NiCl₂, CoCl₂, CrCl₃, AuCl₃, VCl₃, ZnCl₂, NbCl₅ and wherein the post-transition metal chloride or nitrate comprises any one of the following: BiCl₃, Al(NO₃)₃, the transition metal iodides and/or post-transition metal iodides comprise a respective one of the following: Cul, CuI₂, Agl, FeI₂, MnI₂, NiI₂, CoI₂, CrI₃, AuI₃, VI₃, ZnI₂, NbI₅, BiI₃ and/or AlI₃.

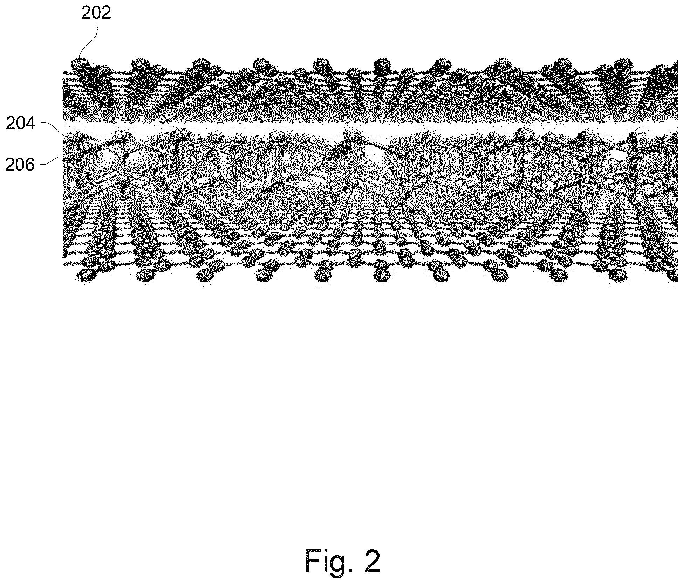

Figure 2 shows a two-dimensional layered heterostructure. In the example of figure 2, the two-dimensional layered heterostructure comprises graphene 202, iodine ions 204 and copper ions 206. The two-dimensional layered heterostructure may be deposited on a substrate, which is not shown in the figure.

In the example of figure 2, the two-dimensional layered heterostructure comprises two first layers of graphene 202 and one second layer of copper iodide 204, 206. The one second layer of copper iodide 204, 206 is encapsulated by one first layer of graphene 202 on each side.

While the invention has been illustrated and described in detail in the drawings and foregoing description, such illustration and description are to be considered illustrative or exemplary and not restrictive; the invention is not limited to the disclosed examples.

### REFERENCE SIGNS LIST

- 100: method for depositing a two-dimensional layered heterostructure on a substrate
- 202: graphene
- 204: iodine ions
- 206: copper ions

## Claims

1. A method for depositing a two-dimensional layered heterostructure comprising at least two first layers encapsulating at least one second layer, in particular one second layer, on a substrate, the method comprising:
• providing a graphene oxide suspension and a precursor material, wherein the graphene oxide suspension comprises graphene oxide and water, wherein the precursor material comprises a chemically-bonded transition metal or post-transition metal;
• mixing the precursor material and the graphene oxide suspension to provide a reactant composition;
• providing the substrate;
• depositing the reactant composition onto the substrate;
• forming the two-dimensional layered heterostructure on the substrate by reducing the graphene oxide to graphene forming the at least two first layers and performing a metathesis reaction with the precursor material resulting in a product forming the at least one second layer, in particular one second layer.

2. The method of claim 1, wherein the chemically-bonded transition metal or post-transition metal is comprised by a transition metal chloride or nitrate, post-transition metal chloride or nitrate or ammonium tetrathiomolybdate.

3. The method of claim 2, wherein in case the chemically-bonded transition metal or post-transition metal is comprised by the transition metal chloride or nitrate or the post-transition metal chloride or nitrate, reducing the graphene oxide to graphene comprises providing and adding hydroiodic acid onto the reactant composition deposited onto the substrate.

4. The method of any of claims 2 or 3, wherein:
• in case the chemically-bonded transition metal or post-transition metal is comprised by the transition metal chloride or nitrate, or the post-transition metal chloride or nitrate, the metathesis reaction with the precursor material is performed by providing and adding hydroiodic acid onto the reactant composition deposited onto the substrate and results in a transition metal iodide or post-transition metal iodide as the product; or
• in case the chemically-bonded transition metal is comprised by ammonium tetrathiomolybdate, the metathesis reaction is being adapted to result in molybdenum disulfide as the product.

5. The method of any of the previous claims, wherein the depositing comprises depositing the reactant composition onto a surface of the substrate, in particular wherein the depositing technique comprises any one or a combination of the following: dip-coating, spray-coating, spin-coating, depositing by drying, drop-casting, printing, vapor deposition, electrodeposition, blade coating, slot-die coating, inkjet printing, or bar coating.

6. The method of any of the previous claims, wherein the graphene oxide suspension comprises graphene oxide sheets with a lateral size of at least 1µm, wherein the lateral size is defined as the largest dimension within the plane of the graphene oxide sheets.

7. The method of any of the previous claims, wherein the substrate has a solid aggregate state and comprises a surface that is chemically inert and resistant to corrosion.

8. The method of any of the previous claims, further comprising, after providing the substrate, before the depositing, activating a substrate to become hydrophilic in case the substrate is not hydrophilic.

9. The method of claim 8, wherein the activating comprises any one or a combination of the following: exposing the substrate to oxygen plasma, exposing the substrate to an electrostatic field, exposing the substrate to silane coupling agents.

10. The method of any of the previous claims, wherein the oxygen content of the graphene oxide comprised by the reactant composition is at least 30 at%.

11. The method of any of the previous claims, wherein for each 1 milligram of graphene oxide comprised by the reactant composition, the reactant composition comprises at least 70 mmol of the precursor material.

12. The method of any of the previous claims, wherein the method is performed at a temperature between 0 °C and 1200 °C, in particular at a temperature between 5 °C and 1000 °C.

13. The method of any of the previous claims, wherein the method is performed under ambient pressure, wherein the ambient pressure is in between 85 kPa to 115 kPa, in particular in between 90 kPa to 110 kPa, in particular in between 95 kPa to 105 kPa.

14. The method of any of claims 2 to 13, wherein the transition metal chloride or nitrate comprises any one of the following: CuCl₂, AgNO₃, FeCl₂, MnCl₂, NiCl₂, CoCl₂, CrCl₃, AuCl₃, VCl₃, ZnCl₂, NbCl₅ and wherein the post-transition metal chloride or nitrate comprises any one of the following: BiCl₃, Al(NO₃)₃.

15. A two-dimensional layered heterostructure deposited on a substrate, wherein the two-dimensional heterostructure comprises at least two first layers comprising graphene and at least one second layer, in particular one second layer, comprising a transition metal iodide, a post-transition metal iodide or molybdenum disulfide, wherein the at least one second layer, in particular the one second layer, is encapsulated by at least one first layer on each side.

## Amended claims

### Amended claims in accordance with Rule 137(2) EPC.

1. A method for depositing a two-dimensional layered heterostructure comprising at least two first layers encapsulating at least one second layer, in particular one second layer, on a substrate, the method comprising:
• providing a graphene oxide suspension and a precursor material, wherein the graphene oxide suspension comprises graphene oxide and water, wherein the precursor material comprises a chemically-bonded transition metal or post-transition metal;
• mixing the precursor material and the graphene oxide suspension to provide a reactant composition;
• providing the substrate;
• depositing the reactant composition onto the substrate;
• forming the two-dimensional layered heterostructure on the substrate by reducing the graphene oxide to graphene forming the at least two first layers and performing a metathesis reaction with the precursor material resulting in a product forming the at least one second layer, in particular one second layer.

2. The method of claim 1, wherein the chemically-bonded transition metal or post-transition metal is comprised by a transition metal chloride or nitrate, post-transition metal chloride or nitrate or ammonium tetrathiomolybdate.

3. The method of claim 2, wherein in case the chemically-bonded transition metal or post-transition metal is comprised by the transition metal chloride or nitrate or the post-transition metal chloride or nitrate, reducing the graphene oxide to graphene comprises providing and adding hydroiodic acid onto the reactant composition deposited onto the substrate.

4. The method of any of claims 2 or 3, wherein:
• in case the chemically-bonded transition metal or post-transition metal is comprised by the transition metal chloride or nitrate, or the post-transition metal chloride or nitrate, the metathesis reaction with the precursor material is performed by providing and adding hydroiodic acid onto the reactant composition deposited onto the substrate and results in a transition metal iodide or post-transition metal iodide as the product; or
• in case the chemically-bonded transition metal is comprised by ammonium tetrathiomolybdate, the metathesis reaction is being adapted to result in molybdenum disulfide as the product.

5. The method of any of the previous claims, wherein the depositing comprises depositing the reactant composition onto a surface of the substrate, in particular wherein the depositing technique comprises any one or a combination of the following: dip-coating, spray-coating, spin-coating, depositing by drying, drop-casting, printing, vapor deposition, electrodeposition, blade coating, slot-die coating, inkjet printing, or bar coating.

6. The method of any of the previous claims, wherein the graphene oxide suspension comprises graphene oxide sheets with a lateral size of at least 1µm, wherein the lateral size is defined as the largest dimension within the plane of the graphene oxide sheets.

7. The method of any of the previous claims, wherein the substrate has a solid aggregate state and comprises a surface that is chemically inert and resistant to corrosion.

8. The method of any of the previous claims, further comprising, after providing the substrate, before the depositing, activating a substrate to become hydrophilic in case the substrate is not hydrophilic.

9. The method of claim 8, wherein the activating comprises any one or a combination of the following: exposing the substrate to oxygen plasma, exposing the substrate to an electrostatic field, exposing the substrate to silane coupling agents.

10. The method of any of the previous claims, wherein the oxygen content of the graphene oxide comprised by the reactant composition is at least 30 at%.

11. The method of any of the previous claims, wherein for each 1 milligram of graphene oxide comprised by the reactant composition, the reactant composition comprises at least 70 mmol of the precursor material.

12. The method of any of the previous claims, wherein the method is performed at a temperature between 0 °C and 1200 °C, in particular at a temperature between 5 °C and 1000°C.

13. The method of any of the previous claims, wherein the method is performed under ambient pressure, wherein the ambient pressure is in between 85 kPa to 115 kPa, in particular in between 90 kPa to 110 kPa, in particular in between 95 kPa to 105 kPa.

14. The method of any of claims 2 to 13, wherein the transition metal chloride or nitrate comprises any one of the following: CuCl₂, AgNO₃, FeCl₂, MnCl₂, NiCl₂, CoCl₂, CrCl₃, AuCl₃, VCl₃, ZnCl₂, NbCl₅ and wherein the post-transition metal chloride or nitrate comprises any one of the following: BiCl₃, Al(NO₃)₃.

15. A two-dimensional layered heterostructure deposited on a substrate, wherein the two-dimensional heterostructure comprises at least two first layers comprising graphene and at least one second layer, in particular one second layer, comprising a transition metal iodide or a post-transition metal iodide, wherein the at least one second layer, in particular the one second layer, is encapsulated by at least one first layer on each side.
